# FASCICULE DE BREVET EUROPEEN

(11) **EP 0 884 881 B1**
(45) Date de publication et mention de la délivrance du brevet: **01.03.2006**
(21) Numéro de dépôt: 98401145.2
(22) Date de dépôt: 13.05.1998
(51) Int. Cl.: H04L 29/06, H04L 12/413

(54) **Procédé et dispositif de contrôle des accès à un champ de données destiné à être émis sur un réseau de transmission d'informations**
Verfahren und Vorrichtung zur Steuerung des Zugriffs auf ein zum Aussenden über ein Nachrichtenübertragungsnetz bestimmtes Datenfeld
Method and apparatus for controlling access to a data field to be sent on an information transmission network

(30) Priorité: 27.05.1997 FR 9706482
(43) Date de publication de la demande: 16.12.1998
(73) Titulaire: AUTOMOBILES PEUGEOT, 75116 Paris (FR); AUTOMOBILES CITROEN, 92200 Neuilly-sur-Seine (FR)
(72) Inventeur: Martin, Paul, 78750 Mareil Marly (FR)
(74) Mandataire: Habasque, Etienne J. Jean-François

(56) Documents cités:
- EP-A- 0 328 435
- US-A- 5 303 348
- ETSCHBERGER K ET AL: "VOM AUTO IN DIE INDUSTRIE" ELEKTRONIK, vol. 39, no. 12, 8 juin 1990, pages 109-114, XP000128165

## Description

La présente invention concerne un procédé de contrôle des accès à un champ de données destiné à être émis par une première station vers au moins une seconde station, en utilisant un mécanisme de réponse dans une trame de communication dans un réseau de transmission d'informations et un réseau correspondant.

On connaît déjà dans l'état de la technique, comme par exemple par le document EP-0 328 435, des procédés et des réseaux de transmission de ce type qui sont également appelés procédés et dispositifs de réponse dans une trame de communication et qui consistent en ce qu'au moins une des stations accède au réseau, pour transmettre un début de trame de message, encore appelé champ d'en-tête, et en ce qu'en fonction de ce champ d'entête de message, une autre station accède au réseau pour transmettre la fin de la trame du message contenant notamment une information d'événement ou de donnée de cette station, cette fin de trame étant également appelée de façon générale champ de données.

Cependant, ces procédés et dispositifs posent un certain nombre de problèmes notamment concernant la mise à jour et la transmission du champ de données.

En effet, l'instant d'émission des données n'est pas contrôlé par la station produisant les données, mais par celle souhaitant les obtenir.

Si la station produisant les données souhaite mettre celles-ci à jour, il existe alors un risque que cette-mise à jour intervienne au cours de la transmission de celles-ci sur le réseau, si cette mise à jour à lieu entre-temps.

Le risque est alors que la station correspondante transmette des informations incohérentes entre elles, les unes ayant été mises à jour et les autres non.

Pour tenter de résoudre ce problème, on a déjà proposé dans l'état de la technique, d'adjoindre au champ de données, par exemple en début de celui-ci, un marqueur de validité.

Ce marqueur est alors établi à une certaine valeur avant toute mise à jour de ces données, puis établi à une autre valeur une fois la mise à jour effectuée.

Une station lisant ces données peut alors par analyse de ce marqueur, déterminer si ces données sont ou non en cours de modification et de mise à jour et si elles doivent donc être considérées comme valides ou invalides.

Cependant, ce mécanisme est insuffisant, car il ne permet pas de résoudre le problème de la transmission d'un champ de données incohérentes notamment lorsque la mise à jour se déclenche alors que les données sont en cours de transmission.

Le but de l'invention est donc de résoudre ces problèmes.

A cet effet, l'invention a pour objet un procédé de contrôle des accès à un champ de données destiné à être émis par une première station vers au moins une seconde station, par réponse dans une trame de communication dans un réseau de transmission d'informations, caractérisé en ce qu'il comporte les étapes suivantes :
- une étape d'établissement par la première station d'une information d'état de contrôle d'accès par sémaphore au champ de données par cette première station, relative à la transmission et à la mise à jour de ce champ de données par cette première station ;
- une étape d'analyse de cette information d'état par la première station ; et
- une étape de validation ou d'invalidation des accès à ce champ de données par la première station, pour la mise à jour ou la transmission de ce champ par cette première station.

Selon un autre aspect, l'invention a également pour objet un réseau de transmission d'informations correspondant.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un réseau de transmission d'informations selon l'invention.
- la Fig.2 représente un schéma synoptique illustrant la structure d'un message utilisant un mécanisme de réponse dans une trame de communication; et
- la Fig.3 représente un schéma synoptique illustrant la structure et le fonctionnement d'un procédé de contrôle selon l'invention.

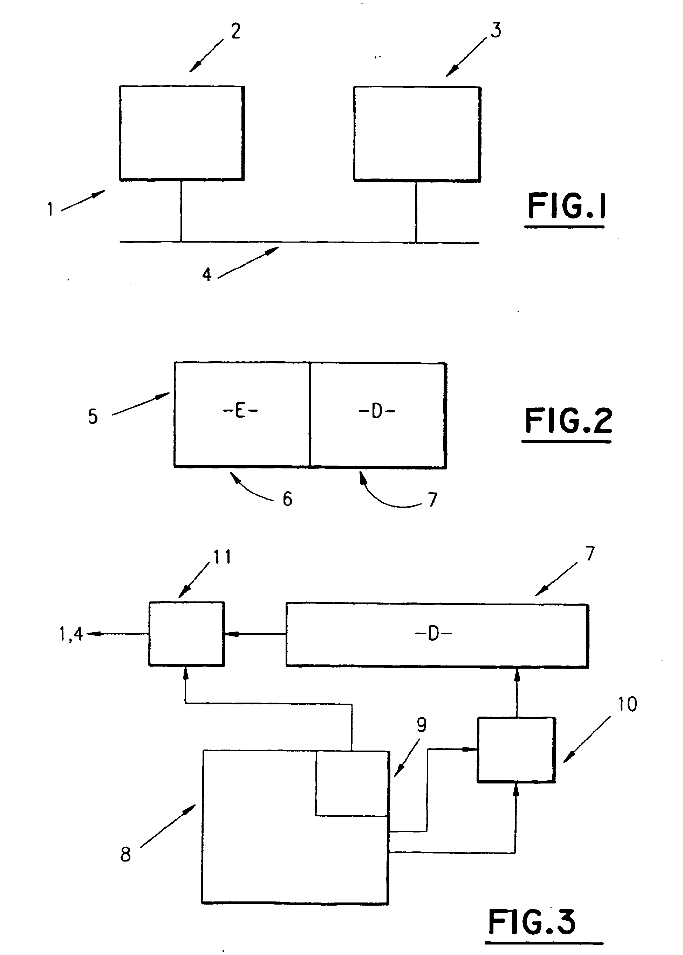

On reconnaît en effet sur la figure 1, un réseau de transmission d'informations désigné par la référence générale 1 sur cette figure, qui comporte au moins deux stations désignées par les références générales 2 et 3 sur cette figure, reliées par un bus de transmission d'informations désigné par la référence générale 4.

L'échange des informations entre ces stations se fait par l'intermédiaire de messages transitant sur le bus de réseau.

Sur la figure 2, on a représenté un exemple de réalisation d'un tel message de transmission d'informations, utilisant un mécanisme de réponse dans la trame.

Ce message est désigné par la référence générale 5 sur cette figure et comporte par exemple au moins un champ d'en-tête E désigné par la référence générale 6 sur cette figure 2 et un champ de données D désigné par la référence générale 7 sur cette figure.

Dans le mécanisme de réponse dans la trame, le champ d'en-tète 6 est émis par une première station, telle que par exemple la station 2 représentée sur la figure 1, tandis que le champ de données 7 est émis par une autre station, telle que par exemple la station 3 représentée sur la figure 1.

Cette structure de message permet de faire transiter sur le réseau de transmission d'informations des messages présentant des formats identiques, que ceux-ci soient émis en totalité par une seule station ou en partie par une première station et en partie par une seconde station.

Comme cela a été indiqué précédemment, ce type de mécanismes pose un certain nombre de problèmes concernant la transmission et la mise à jour du champ de données.

Pour résoudre ces problèmes, on utilise selon l'invention, un procédé de contrôle des accès à ce champ de données, en associant à celui-ci, un mécanisme de contrôle d'accès par sémaphore.

La structure et le fonctionnement d'un tel mécanisme sont illustrés sur la figure 3, dans laquelle on reconnaît le champ de données 7 qui peut par exemple être préparé par la station considérée dans un registre de celle-ci, cette station comportant par exemple une unité centrale de traitement d'informations désignée par la référence générale 8.

Le mécanisme de contrôle des accès par sémaphore est quant à lui désigné par la référence générale 9.

On charge alors dans ce sémaphore par exemple par l'intermédiaire de l'unité centrale 8, une information d'état relative à la transmission et à la mise à jour du champ de données correspondant pour valider ou invalider les accès à celui-ci, pour sa mise à jour ou sa transmission.

On a schématisé ce fonctionnement en implantant autour du registre contenant le champ de données 7, des mécanismes de contrôle d'accès pour la validation ou l'inhibition des accès à celui-ci.

C'est ainsi que sur cette figure, un premier mécanisme de contrôle désigné par la référence générale 10 est interposé entre l'unité centrale 8 et le registre correspondant contenant le champ de données, pour valider ou inhiber les accès de l'unité centrale à ce registre en vue de la mise à jour du champ de données contenu dans ce registre.

Ce mécanisme 10 de contrôle d'accès est piloté selon la valeur du sémaphore 9.

Un autre mécanisme de contrôle désigné par la référence générale 11 est quant à lui interposé entre ce registre et le réseau 1 de transmission d'informations et par exemple le bus 4 de celui-ci, pour contrôler la transmission du champ de données sur ce réseau en fonction de la valeur du sémaphore.

Il va de soi bien entendu que cette structure n'est donnée qu'à titre illustratif pour expliquer de façon plus claire, le procédé de contrôle des accès au registre contenant le champ de données, celui-ci pouvant être mis en oeuvre par simple programmation de la station.

En fait, l'information d'état relative à la transmission et à la mise à jour du champ de données contenue dans le sémaphore 9, peut prendre quatre valeurs, à savoir :
1) une première valeur indiquant que le champ de données est prêt à être transmis,
2) une seconde valeur indiquant que le champ de données a été transmis et que la mise à jour de celui-ci est possible sans risque, par l'unité centrale 8,
3) une troisième valeur indiquant que le champ de données est en cours de mise à jour par l'unité centrale 8 de la station alors que celui-ci n'est pas en cours de transmission. Dans ce cas, la transmission de ce champ de données sur le réseau doit être invalidée tant que le champ de données n'a pas été mis à jour complètement. Une fois cette-mise à jour complètement terminée, la transmission du champ de données sur le réseau doit à nouveau être autorisée en faisant passer la valeur du sémaphore de cette troisième valeur à sa première valeur, indiquant ainsi que le message est prêt à être transmis, et
4) une quatrième valeur indiquant que l'unité centrale 8 de la station tente de mettre à jour le champ de données alors que celui-ci est en cours de transmission sur le réseau. Dans ce cas, l'accès de l'unité centrale au registre de données est invalidé et cette unité centrale doit attendre que le sémaphore prenne la seconde valeur pour remettre à jour le champ de données et autoriser à nouveau la transmission de celles-ci sur le réseau en faisant passer le sémaphore à sa première valeur pour indiquer que les données sont prêtes à être transmises.

On conçoit alors que dans ce cas, et si l'on applique un tel fonctionnement à la structure illustrée sur la figure 3, les mécanismes de contrôle d'accès 10 et 11 pilotés selon la valeur du sémaphore 9, permettent de contrôler les accès de l'unité centrale au registre contenant le champ de données et la transmission des données contenues dans celui-ci sur le réseau, en fonction de la valeur contenue dans ce sémaphore.

Ceci permet alors de garantir une transmission de données cohérentes sur le réseau.

## Revendications

1. Procédé de contrôle des accès à un champ de données (7) destiné à être émis par une première station (3) vers au moins une seconde station (2), par réponse dans une trame de communication dans un réseau de transmission d'informations, **caractérisé en ce qu'**il comporte les étapes suivantes :
- une étape d'établissement par la première station (3) d'une information d'état de contrôle d'accès par sémaphore au champ de données par cette première station (7), relative à la transmission et à la mise à jour de ce champ de données par cette première station ;
- une étape d'analyse de cette information d'état par la première station : et
- une étape de validation ou d'invalidation des accès à ce champ de données (7) par la première station (3), pour la mise à jour ou la transmission de ce champ par cette première station.

2. Procédé selon la revendication 1, **caractérisé en ce que** l'étape d'étabüssement par la première station de l'information d'état comporte une étape d'établissement de celle-ci à l'une parmi quatre valeurs, à savoir :
1) une première valeur indiquant que le champ de données est prêt à être transmis :
2) une seconde valeur indiquant que le champ de données a été transmis et que la mise à jour de celui-ci est possible sans risque ;
3) une troisième valeur indiquant que le champ de données est en cours de mise à jour par la première station (3) alors que celui-ci n'est pas en cours de transmission sur te réseau, pour invalider sa transmission ; et
4) une quatrième valeur indiquant que ta première station (3) tente de mettre à jour le champ de données alors que celui-ci est en cours de transmission sur le réseau, pour invalider sa mise à jour.

3. Réseau de transmission d'informations comportant au moins deux stations (2,3) et sur lequel est émis un message comportant au moins un champ de données (7) destiné à être émis par une première station (3) vers au moins une seconde station (2) par réponse dans une trame de communication sur le réseau, **caractérisé en ce que** la première station comporte :
- des moyens (9,10,11) de contrôle d'accès par sémaphore au champ de données par cette première station, et dans lesquels est chargée une information d'état relative à la transmission et la mise à jour de ce champ de données par cette première station ;
- des moyens (8) d'analyse de cette information par cette première station ; et
- des moyens (8) de validation ou d'invalidation des accès à ce champ de données par cette première station en fonction du résultat de l'analyse de cette information, pour sa mise à jour ou sa transmission par cette première station.

## Patentansprüche

1. Verfahren zum Steuern der Zugriffe auf ein Datenfeld (7), das von einer ersten Station (3) zu wenigstens einer zweiten Station (7) durch Antwort in einem Kommunikationsrahmen in einem Informationsübertragungsnetz gesendet werden soll, **dadurch gekennzeichnet, dass** es die folgenden Schritte umfasst:
- einen Schritt, bei dem die erste Station (3) einen Informationszustand für die Steuerung der Zugriffe durch Semaphor auf das Datenfeld durch diese erste Station (7) zum und Aktualisieren dieses Datenfeldes durch diese erste Station herstellt;
- einen Schritt, bei dem dieser Informationszustand durch die erste Station analysiert wird; und
- einen Schritt, bei dem Zugriffe auf dieses Datenfeld (7) durch die erste Station (3) für gültig oder ungültig erklärt wird, damit dieses Feld durch die erste Station aktualisiert oder gesendet wird.

2. Verfahren nach Anspruch 1, **dadurch gekennzeichnet, dass** der Schritt des Herstellens des Informationszustandes durch die erste Station einen Schritt des Herstellens dieses Zustandes mit einem von vier Werten umfasst, nämlich:
1) einen ersten Wert, der angibt, dass das Datenfeld für die Übertragung bereit ist;
2) einen zweiten Wert, der angibt, dass das Datenfeld gesendet worden ist und dass seine Aktualisierung gefahrlos möglich ist;
3) einen dritten Wert, der angibt, dass das Datenfeld momentan durch die erste Station (3) aktualisiert wird, während es nicht auf dem Netz gesendet wird, um seine Übertragung für ungültig zu erklären; und
4) einen vierten Wert, der angibt, dass die erste Station (3) das Datenfeld aktualisieren möchte, während es auf dem Netz übertragen wird, um seine Aktualisierung für ungültig zu erklären.

3. Informationsübertragungsnetz, das wenigstens zwei Stationen (2, 3) umfasst und auf dem eine Nachricht gesendet wird, die wenigstens ein Datenfeld (7) enthält, das dazu bestimmt ist, von einer ersten Station (3) zu wenigstens einer zweiten Station (2) durch Antwort in einem Kommunikationsrahmen in dem Netz gesendet zu werden, **dadurch gekennzeichnet, dass** die erste Station umfasst:
- Mittel (9, 10, 11) zum Steuern des Zugriffs durch Semaphor auf das Datenfeld durch diese erste Station, in die ein Informationszustand für die Übertragung und die Aktualisierung dieses Datenfeldes durch diese erste Station geladen wird;
- Mittel (8) zum Analysieren dieser Informationen durch diese erste Station; und
- Mittel (8), die den Zugriff auf dieses Datenfeld durch diese erste Station in Abhängigkeit vom Ergebnis der Analyse dieser Informationen für gültig oder ungültig erklären, um das Datenfeld durch diese erste Station zu aktualisieren oder zu übertragen.

## Claims

1. Method of controlling access to a data field (7) intended to be sent by a first station (3) to at least one second station (2), by response in a communication frame in an information transmission network, **characterized in that** it comprises the following steps:
- a step for setting up by the first station (3) status information for controlling access by semaphore to the data field by this first station (3), relating to the transmission and the updating of this data field by this first station;
- a step for analysing this status information by the first station; and
- a step for enabling or disabling access to this data field (7) by the first station (3), for the updating or transmission of this field by this first station.

2. Method according to Claim 1, **characterized in that** the step for setting up the status information by the first station comprises a step for setting up the latter with one of four values, namely:
1) a first value indicating that the data field is ready to be transmitted;
2) a second value indicating that the data field has been transmitted and that the updating of the latter is possible without risk;
3) a third value indicating that the data field is being updated by the first station (3) while the latter is not being transmitted over the network, to disable its transmission; and
4) a fourth value indicating that the first station (3) is trying to update the data field while the latter is being transmitted over the network, to disable its updating.

3. Information transmission network including at least two stations (2, 3) and over which is sent a message including at least one data field (7) intended to be sent by a first station (3) to at least one second station (2) by response in a communication frame over the network, **characterized in that** the first station includes:
- means (9, 10, 11) of controlling access by semaphore to the data field by this first station, and in which is loaded status information relating to the transmission and the updating of this data field by this first station;
- means (8) of analysing this information by this first station; and
- means (8) of enabling or disabling access to this data field by this first station according to the result of the analysis of this information, for its updating or its transmission by this first station.
